# EUROPEAN PATENT SPECIFICATION

(11) **EP 0 648 643 B1**
(45) Date of publication and mention of the grant of the patent: **14.01.1998**
(21) Application number: 94116388.3
(22) Date of filing: 18.10.1994
(51) Int. Cl.: B60R 16/02

(54) **Automotive wiring harness**
Kraftfahrzeug-Kabelbündel
Faisceau de câble pour automobile

(30) Priority: 19.10.1993 JP 286118/93
(43) Date of publication of application: 19.04.1995
(73) Proprietor: Sumitomo Wiring Systems, Ltd., Yokkaichi-shi Mie-ken (JP)
(72) Inventor: Yasukuni, Jun, c/o Sumitomo Wiring Systems, Ltd., Yokkaichi-shi, Mie-ken (JP)
(74) Representative: KUHNEN, WACKER & PARTNER

(56) References cited:
- EP-A- 0 284 488
- WO-A-92/09089

## Description

### BACKGROUND OF THE INVENTION

### Field of the Invention

The present invention relates to automotive wiring harnesses for transmitting electric power and electric signals and including electric wires, connecting terminals, relays, fuses and the like.

### Description of the Prior Art

Wiring harnesses generally comprise insulation coated wires, connectors, relay boxes and the like. For ease of mounting the harnesses in automotive vehicles and for protection of the harnesses, exteriorly mounting parts such as protectors and grommets are also used together with the harnesses.

The components are made of respectively suitable materials as shown in Table 1. It is accordingly necessary to disassemble and classify the wiring harnesses for each component in recovering the wiring harnesses from out-of-use automotive vehicles for reuse of materials.

**TABLE 1**

| COMPONENT | CONSTITUENT MEMBER | MAJOR CONSTITUENT MATERIAL | WEIGHT | |
|---|---|---|---|---|
| | | | (kg) | (%) |
| WIRE | NORMAL CONDUCTOR | copper,copper alloy(Sn,Si) | 11.4 (0.6) | 52.2 (5.3) |
| | BRAIDED WIRE | tinned copper | | |
| | COATING | PVC,crosslinked PVC, crosslinked PE | 3.8 | 17.4 |
| CONNECTOR | TERMINAL | brass(plated and non-plated), | 0.9 | 3.9 |
| | | copper alloy(Sn,Fe) | | |
| | HOUSING | PBT,nylon 66 (with and without filler) | 1.3 | 5.8 |
| | RUBBER PLUG, RUBBER RING | oil-containing NBR,silicone | 0.0 | 0.2 |
| J / B R / B F / B | BUS BAR | copper,tinned brass | 0.2 | 1.1 |
| | RELAY TERMINAL | tinned brass,copper alloy | 0.1 | 0.3 |
| | CASE, CONNECTOR BASE | PP,nylon 66,nylon alloy | 0.6 | 2.6 |
| | INSULATING PLATE | PP(with glass,talc fillers) | 0.1 | 0.4 |
| | ATTACHMENT | fuse,relay,electric parts | 0.2 | 0.6 |
| EXTERIORLY MOUNTING PART | CORRUGATE TUBE | PP,nylon 66 | 0.2 | 0.9 |
| | TUBE | PVC,crosslinked PVC,glass varnish | 0.5 | 2.4 |
| | TAPE | PVC,crosslinked PVC,crosslinked PE | 0.5 | 2.5 |
| | SOFT TAPE | PVC/urethane | 0.0 | 0.0 |
| | PROTECTOR | PP,nylon 66 | 1.1 | 5.1 |
| | CLAMP | PP,nylon 66 | 0.2 | 1.0 |
| | COVER | PVC,silicone,EPDM | 0.0 | 0.1 |
| | GROMMET | EPDM,CR,silicone,TPE | 0.4 | 1.5 |
| | SHEET | PVC,urethane | 0.4 | 1.6 |
| | RESIN ELEMENT | PP | 0.0 | 0.0 |
| OTHERS | GREASE | | 0.1 | 0.4 |
| TOTAL → | | | 21.9 | 100 |

Such classification is generally carried out by hand, and some components are readily classified but others are not. Specifically, the exteriorly mounting parts such as grommets, and relay boxes are removed relatively easily. On the other hand, insulation coated wires and connectors which are key parts of the wiring harnesses are very difficult to disassemble and remove because of increase in the number of wires, divergence of the wires in various directions, and multipolarity and complexity of the connectors.

In recovery of the components, the components are once mechanically crushed and then classified by the use of different specific gravity and conductivity thereof. The processes of classification are complicated and are greatly prone to cause foreign materials to mix in the components, resulting in quality deterioration of recycling materials.

From European patent application, publication number 0 284 488, an automotive wiring harness is known comprising a plurality of electrical leads and connectors connected to the ends of the electrical leads. Such known electrical wiring harness, for forming a rigid body, comprises a sheathing from insulating plastic material covering the electrical leads and also the connectors.

It is an object of the present invention to provide wiring harnesses which are easy to recover and reuse.

This object, in accordance with the present invention, is achieved by an automotive wiring harness having the features of claim 1.

A preferred embodiment of such a wiring harness is subject matter of claim 2.

According to the wiring harness of the present invention, the insulation coated wires and connector which are key parts of the wiring harness and which are most difficult to classify and recover are adapted such that the connector housing and the insulation coating of the insulation coated wires are formed of the same material. Thus, the recovery of the wiring harness requires only crushing them and separating them into metal components and resin components, thereby facilitating recycling of the resin material and improving the quality (purity) of reclaimed articles.

These and further aspects and advantages of the present invention will become more apparent from the following detailed description of the present invention.

### DESCRIPTION OF THE PREFERRED EMBODIMENTS

A preferred embodiment will be described hereinafter according to the present invention. A wiring harness of the present invention comprises insulation coated wires, connectors and junction blocks connected to the insulation coated wires, with corrugate tubes, grommets and the like exteriorly mounted thereon.

The insulation coated wire includes a core wire made of tinned copper, and a coating made of nylon 12. The coating of the insulation coated wire and the connector housing of the connector may be made of nylon 11, nylon 6·10, elastomer polyester (elastomber PBT), elastomer nylon, nylon 66/PP alloy other than nylon 12.

The junction block includes a bus bar and a relay terminal which are formed of tinned brass, a case and a connector base which are made of PP (polypropylene) with fillers, and an insulating plate made of PP (polypropylene). The corrugate tube is formed of PP (polypropylene), and the grommet is formed of EPDM (ethylene-propylene rubber).

In the wiring harness, as above described, the insulation coates wires and connectors which are difficult to separate and recover are adapted such that the connector housings and the insulation coatings are made of the same material, nylon 12. Therefore, separation and recovery of the components of the wiring harness require only separation between metal components and resin components.

Although the connector housings and the insulation coatings are made of nylon 12 in this preferred embodiment, the present invention is not so limited. Various other materials may be used as the material of the connector housings and insulation coatings.

Further, to facilitates separation and recovery of the components, it is considered to possibly standardize the materials to be used, to use the resin material limited to a thermoplastic resin but not to use the resin material crosslinked by electron rays, to disuse conventionally used foreign materials such as paper and cloth, and to disuse composite materials formed by laminating foreign materials.

While the invention has been shown and described in detail, the foregoing description is in all aspects illustrative and not restrictive. It is therefore understood that numerous modifications and variations can be devised without departing from the scope of the invention as claimed.

## Claims

1. An automotive wiring harness comprising:
a plurality of insulation coated wires each including a core wire and an insulation coating for coating said core wire, and
a connector connected to an end of said insulation coated wires and including terminals and a housing, characterized in that
said housing of said connector and said insulation coating of said insulation coated wires are made of the same material, which can be recycled.

2. The automotive wiring harness of claim 1, wherein said insulation coating and said housing are formed of a thermoplastic resin.

## Patentansprüche

1. Kraftfahrzeug-Kabelbaum mit:
einer Mehrzahl von mit Isolation beschichteten Drähten, die jeweils einen Kerndraht und eine Isolationsbeschichtung zur Bedeckung des Kerndrahtes aufweisen, und
einem an das Ende der genannten, mit Isolation beschichteten Drähte angeschlossenen Verbinder, der Anschlüsse und
ein Gehäuse enthält, dadurch gekennzeichnet, daß
das genannte Gehäuse des Verbinders und die genannte Isolationsbeschichtung der mit Isolation beschichteten Drähte aus demselben Material hergestellt sind, welches recyclet werden kann.

2. Kraftfahrzeug-Kabelbaum nach Anspruch 1, bei welchem die Isolationsbeschichtung und das Gehäuse aus einem thermoplastischen Kunststoff gefertigt sind.

## Revendications

1. Faisceau de câbles pour automobiles, comprenant :
une pluralité de fils revêtus d'isolant comprenant chacun un fil d'âme et un revêtement isolant pour revêtir ledit fil d'âme, et
un connecteur raccordé à une extrémité desdits fils revêtus d'isolant et comprenant des bornes et un boîtier,
caractérisé en ce que :
ledit boîtier dudit connecteur et ledit revêtement isolant desdits fils revêtus d'isolant sont fabriqués en la même matière, qui peut être recyclée.

2. Faisceau de câbles pour automobiles suivant la revendication 1, dans lequel ledit revêtement isolant et lesdits boîtiers sont fabriqués en une résine thermoplastique.
